# EUROPEAN PATENT SPECIFICATION

(11) **EP 2 261 059 B1**
(45) Date of publication and mention of the grant of the patent: **28.08.2013**
(21) Application number: 10163731.2
(22) Date of filing: 25.05.2010
(51) Int. Cl.: B60C 9/20, B60C 9/22

(54) **Pneumatic tire with an overlay reinforcement**
Luftreifen mit Gürteldecklage
Pneu avec renfort de recouvrement

(30) Priority: 01.06.2009 US 423944
(43) Date of publication of application: 15.12.2010
(73) Proprietor: The Goodyear Tire & Rubber Company, Akron, OH 44316-0001 (US)
(72) Inventor: Imhoff, Serge Julien Auguste, L-9184 Schrondweiler (LU); Donckels, Yves, B-5360 Natoye (BE)
(74) Representative: Kutsch, Bernd

(56) References cited:
- EP-A2- 0 387 181
- EP-A2- 0 479 065
- US-A1- 2008 105 352
- US-B1- 6 425 426

## Description

### Field of the Invention

The present invention relates generally to pneumatic tires and more specifically to radial carcass tires having a textile overlay structure located radially outwardly of the belt assembly.

### Background of the Invention

Conventional radial carcass tires have a reinforcing member disposed radially outwardly of the belt assembly. The reinforcing member may comprise textile cords oriented at small angles with respect to the mid-circumferential plane of the tire. Such a reinforcing member has been found to be acceptably durable when subjected to high revolution speeds.

Such a reinforcing member, referred to as an overlay ply, may be interposed between the radially outermost ply of the belt assembly and the tread and comprise one or more wraps having a width which is about equal to that of the widest of the belt plies. Alternatively, the overlay ply may consist of two separate axially spaced apart ply portions either disposed radially outwardly of the belt assembly such as to cover the edges of the radially outermost belt ply or interposed between the belt plies such as to extend between the edges thereof.

Another alternative for an overlay ply consists in interposing a helically wound cord or single yarn, which has been coated with elastomeric material, between the radially outermost ply of the belt assembly and the tread. As winding a single cord is time consuming, conventionally an overlay ply is assembled from a 5 mm to 30 mm wide, helically wound strip, made from cord reinforced elastomeric material, located radially outwardly to the belt plies. The conventional overlay reinforcing material is nylon, which has a Youngs modulus of about 6,000 MPa. Such a low modulus allows expansion of the belt during the shaping and vulcanizing steps of the tire.

It would be desirable to more inexpensively provide a pneumatic tire with an overlay structure having excellent high speed properties, good comfort and rolling resistance, reduced flatspotting, and low noise propagation.

US-B1- 6,425,426 describes a tire in accordance with the preamble of claim 1.

### Summary of the Invention

The invention relates to a pneumatic tire in accordance with claim 1.

Dependent claims refer to preferred embodiments of the invention.

A pneumatic tire in accordance with a preferred embodiment of the present invention includes a radial ply carcass, a tread portion disposed radially outward of the carcass, and a crown reinforcing structure interposed between the tread portion and the carcass in circumferential relation to the carcass. The crown reinforcing structure includes a belt assembly having at least one belt ply with reinforcement cords extending parallel to one another and an overlay structure including a nylon reinforced layer extending transversely over the belt assembly and making an angle of between -5 degrees and 5 degrees with an equatorial plane of the tire. The nylon reinforced layer preferably includes nylon cords having a 2000-2200/1 Dtex, 1-10 (S or Z) TPI (turns per inch or 2.54 cm) construction with an end density of 15-25 EPI (ends per inch or 2.54 cm).

A pneumatic tire in accordance with an other preferred embodiment of the present invention includes a radial ply carcass, a tread portion disposed radially outward of the carcass, and a crown reinforcing structure interposed between the tread portion and the carcass in circumferential relation to the carcass. The crown reinforcing structure includes a belt assembly having at least one belt ply with reinforcement cords extending parallel to one another and an overlay structure including a nylon reinforced layer extending transversely over the belt assembly and making an angle of between -5 degrees and 5 degrees with an equatorial plane of the tire. The nylon reinforced layer preferably includes nylon cords having a 2400-2600/1 Dtex, 1-10 (S or Z) TPI construction with an end density of 15-25 EPI.

A pneumatic tire in accordance with an other preferred embodiment of the present invention includes a radial ply carcass, a tread portion disposed radially outward of the carcass, and a crown reinforcing structure interposed between the tread portion and the carcass in circumferential relation to the carcass. The crown reinforcing structure includes a belt assembly having at least one belt ply with reinforcement cords extending parallel to one another and an overlay structure including a nylon reinforced layer extending transversely over the belt assembly and making an angle of between -5 degrees and 5 degrees with an equatorial plane of the tire. The nylon reinforced layer preferably includes nylon cords having a 2700-2900/1 Dtex, 1-10 (S or Z) TPI construction with an end density of 15-35 EPI.

### Definitions

The following definitions are controlling for the disclosed invention.
"Belt structure" means at least one, preferably two or more annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.
"Carcass" means the tire structure apart from the belt structure, tread, undertread, and sidewall rubber over the plies, but including the beads.
"Circumferential" means lines or directions extending along the perimeter of the surface of the annular tire parallel to the Equatorial Plane (EP) and perpendicular to the axial direction.
"Cord" means one of the reinforcement strands of which the plies of the tire comprise.
"Cord angle" means the acute angle, left or right in a plan view of the tire, formed by a cord with respect to the equatorial plane. The "cord angle" is measured in a cured but uninflated tire.
"Dtex" means the weight in grams per 10,000 meters.
"Fiber" is a unit of matter, either natural or man-made that forms the basic element of filaments. Fibers are characterized by having a length at least 100 times its diameter or width.
"Filament count" means the number of filaments that make up a yarn.
"Merged cord" means a cord constructed by helically twisting a plurality of individual yarns, at least one of the individual yarns being of a material different from the material of at least one of the other individual yarns.
"Ply" means a continuous layer of rubber-coated parallel cords in the context of a tire and also means a twisted yarn in a context of a yarn or a cord.
"Polyester" means any polymer synthesized from the polycondensation of a diol and a dicarboxylic acid.
"Radial-ply tire" means a belted or circumferentially-restricted pneumatic tire in which the ply cords which extend from bead to bead are laid at cord angles between 65 degree and 90 degree with respect to the equatorial plane of the tire.
"Tenacity" is stress expressed as force per unit linear density of the unstrained specimen (gm/tex or gm/denier).
"Tensile" is stress expressed in forces/cross-sectional area.
"Twisted," means the number of turns about its axis per unit of length of a yarn, turns per inch or 2.54 cm being TPI.
"Yarn" occurs in the following forms: 1) a number of fibers twisted together; 2) a number of filaments laid together without twist; 3) a number of filaments laid together with a degree of twist: 4) a single filament with or without twist (monofilament); 5) a narrow strip of material with or without twist.

### Brief Description of the Drawings

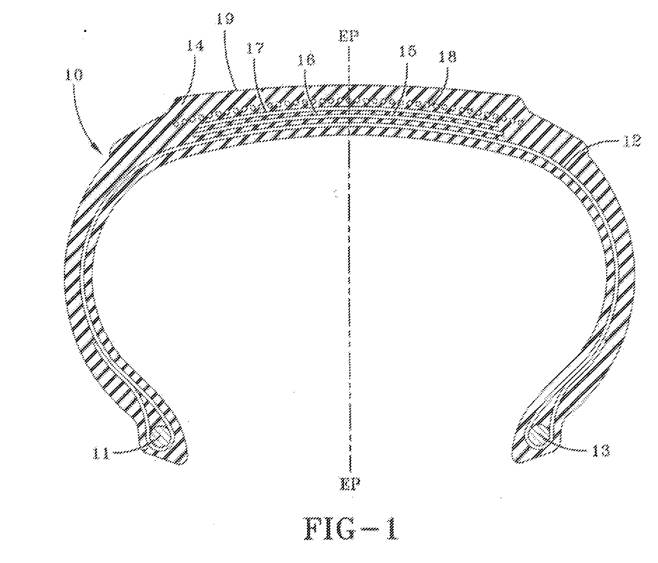

Fig. 1 is a cross-sectional view of a pneumatic tire for use with the present invention.

### Detailed Description of an Example of the Present Invention

With reference to Fig. 1, there is represented an example radial carcass pneumatic tire 10 having a pair of substantially inextensible bead cores 11, 13 which are axially spaced apart with a radial carcass ply 12 extending between the bead cores. The carcass ply 12 is folded axially and radially outwardly about each of the bead cores 11, 13 and is reinforced by cords which are substantially parallel to each other and make an angle with the equatorial plane (EP) of the example tire 10.

As used herein, the "equatorial plane" of the example tire 10 is a plane that is perpendicular to the axis of rotation of the tire and passes through the center of the tire tread 19. The terms "axial" and " axially" refer to directions which are parallel to the axis of rotation of the example tire 10 and the terms "radial" and "radially" refer to directions that are radially toward or away from the axis of rotation of the tire.

The cords of the carcass ply 12 can be made of any suitable material, for example rayon, polyester, polyamide, or aromatic polyamide. The crown area 14 of the tire 10 is reinforced by a belt assembly 15 located radially inwardly of the tire tread 19. The belt assembly 15 may comprise two concentric belt plies 16, 17, each of which consists of an elastomeric layer reinforced by steel cords or other suitable materials, for example aromatic polyamide, glassfiber, PVA, carbon-fiber, or rayon cords. Within each belt ply 16, 17, the cords may be substantially parallel to each other. The cords of the radially innermost belt ply 16 preferably form an angle of between 15 degrees to 30 degrees with the equatorial plane (EP) of the tire 10. The cords of the radially outermost belt ply 17 preferably extend in the diagonally opposite direction to the cords of the radially innermost belt ply 16 and preferably form an angle of between -15 degrees to -30 degrees with the equatorial plane (EP) of the tire 10.

In a cord, each of the yarns has its component filaments twisted together a given number of turns per unit of length of the yarn (usually expressed in TPI) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S," then the twist is called "S" or "left hand." If the slope of the spirals conforms in direction to the slope of the letter "Z," then the twist is called "Z" or "right hand." An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "Dtex" is understood to mean the weight in grams of 10,000 meters of a yarn before the yarn has a twist imparted thereto.

A helically wound strip, forming an overlay layer 18, is superimposed radially, external to the outermost belt ply 17 and may extend transversely over the axially widest portion of the belt plies 16, 17. The helically wound strip may be made from elastomeric material reinforced organic cords such as nylon. Nylon is understood to be an aliphatic polyamide 6, 4.6, or 6.6.

Conventional reinforcements for overlays have utilized a "by one" nylon construction such as 940/1 Dtex 4.6S TPI ("twist per 2.54 cm") or 1400/1 Dtex 4.6S TPI as a cost-effective option. Indeed, a "by one" construction with a low twist and corresponding high modulus may control tire growth, limit standing waves, and achieve a good high speed performance.

However, such "by one" constructions, i.e. having only one yarn, do not achieve certain high speed requirements for high performance tires. Thus, conventional "by two" constructions, i.e. having two yarns, such as 1400/2 Dtex 6/6 TPI , 1400/2 Dtex 8/8 TPI, or 1400/2 10/10 TPI have been implemented for such high speed requirements.

It would be desirable to utilize a "by one" construction for an overlay which could effectively replace the conventional "by two" constructions, which are more costly to produce and exhibit usually lower modulus. In accordance with the present invention, an overlay ply for a high performance tire may have nylon reinforcement cords with a construction of 2000-2200/1 Dtex with a 1-10 TPI twist (S or Z). Additionally, in accordance with the present invention, another overlay ply for a high performance tire may have nylon reinforcement cords with a construction of 2400-2600/1 Dtex with a 1-10 TPI twist (S or Z). Furthermore, in accordance with the present invention, still another overlay ply for a high performance tire may have nylon reinforcement cords with a construction of 2700-2900/1 Dtex with a 1-10 TPI twist (S or Z). The overlay ply may further exhibit 15-35 EPI ("ends per inch") of such cords. Such an overlay ply may provide a cost efficient fabric construction while still achieving equal to better high speed performance compared to conventional 1400/2 Dtex constructions.

Further, the simpler construction of the overlay ply in accordance with the present invention may allow reduction of fabric production time and cost due to higher Dtex yarn being cheaper than lower Dtex yarn. Also, the higher modulus of for instance the 2000-2200/1 Dtex overlay ply construction in accordance with the present invention may provide better high speed performance and less "flatspotting" than the conventional 1400/2 Dtex constructions.

The below table expresses a comparison of the tensile characteristics of a 2100/1 Dtex 4.6S TPI overlay cord construction of the present invention and three other constructions. As the table illustrates, the 2100/1 Dtex 4.6S TPI construction of the present invention provides acceptable tensile characteristics compared with the conventional 1400/2 Dtex 6/6 TPI cord construction while being much less expensive to produce. Further, while the 2800/1 Dtex 4.6S TPI construction, another construction in accordance with the present invention, has more desirable tensile characteristics, it is significantly more expensive than the 2100/1 Dtex 4.6S TPI construction. Additionally, a 2500/1 Dtex 1-10 (S or Z) TPI construction in accordance with the present invention desirably yield tensile characteristics superior to the 2100/1 Dtex 4.6S TPI construction while being less expensive than the 2800/1 Dtex 4.6S TPI construction.

| | **1400/2** | **1400/1** | **2800/1** | **2100/1** |
|---|---|---|---|---|
| **TWIST** | **6/6** | **4.6** | **4.6** | **4.6** |
| Breaking Strength (N) | 231.9 | 124.2 | 243.4 | 176.2 |
| Elongation at break (%) | 17 | 16.2 | 18.1 | 18.2 |
| Lase @ 1 % (N) | 14.6 | 8.5 | 16.9 | 13.6 |
| Lase @ 2% (N) | 25.2 | 13.9 | 27.5 | 22.6 |
| Lase @ 3% (N) | 32.5 | 18.6 | 35.2 | 29.3 |
| Lase @ 4% (N) | 40.9 | 24.3 | 44.8 | 37.6 |
| Lase @ 5% (N) | 52 | 31.6 | 57.3 | 48.5 |
| Lase @ 6% (N) | 65.8 | 40.6 | 72.9 | 61.7 |
| Lase @ 7% (N) | 82.2 | 51.4 | 91.1 | 76.8 |
| Lase @ 8% (N) | 101.1 | 63.7 | 111.8 | 93 |
| Lase @ 9% (N) | 121.8 | 77 | 134.1 | 109 |
| Lase @ 10% (N) | 143.4 | 90.2 | 156.7 | 123.5 |

In a tire, such as the example tire 10, the nylon reinforced helically wound overlay 18 in accordance with the present invention may be superimposed externally on the outermost belt ply 17. The helically wound overlay structure 18 may overlap the lateral ends of the radially outermost belt ply 17 by a few millimeters and may provide rigidity in the circumferential direction, as well as a uniform pressure distribution on the tread surface. Although the overlay structure 18 described above one layer, it could equally comprise a second layer located adjacent to and radially outside of the first layer. The second layer may have its helical convolutions wound with the opposite hand to the first layer so that the nylon cords of each layer cross at a very small angle. With such a construction, the two layers may be wound continuously in succession without a break in the strip. The helical convolutions of the helically wound strip, in place of being in abutment with any adjacent convolution, may also have an overlapping relationship with the previous convolutions, which overlap may be constant or variable across the width of the belt reinforcing structure 15 without departing from the spirit of the instant invention.

Further, it is well known that helical convolutions of a tire built on a flat cylindrical drum are subjected to different elongations during the shaping and vulcanizing step of the tire manufacturing process because the expansion of the tire is greater in the center portion than in the shoulder portions of the belt reinforcing structure. In order to minimize the resulting differences in the stresses of the strip, the strip in the belt center may be wound with a very small winding tension as compared to the winding tension used when making the tire shoulder portion of the strip.

Alternatively, the surface of the cylindrical drum upon which the strip is helically wound may be given a slightly convex shape. This convex shape may conform as closely as possible to the sectional radial shape the overlay ply 18 may take in the finished tire, so as to obtain a minimal stretch difference between the center and shoulder portions of the overlay strip during shaping and curing.

An uncured radial tire undergoes an expansion of about three percent during the shaping in the tire mold. This shaping effects a pantographing of the cords of the belt plies, and a pretension to the cords reinforcing the carcass ply or plies as far as these cords cannot slide around the bead cores. The nylon cords reinforcing the helically wound overlay of the example tire may also be pretensioned during the shaping operation and by adequately choosing an uncured tire dimension and mold shape. It is understood that a curing temperature of 160ºC to 200°C may effect a slight shrinking of the nylon cords only, which effect comes in addition to the shaping.

The above results clearly demonstrate the excellent high speed performance of tires manufactured according to the teaching of the present invention.

## Claims

1. A pneumatic tire comprising a carcass (12), a tread (19) disposed radially outward of the carcass (12) and a crown reinforcing structure (14) interposed between the tread (19) and the carcass (12) in circumferential relation to the carcass (12), the crown reinforcing structure (14) including a belt assembly having at least one belt ply (15, 16) with reinforcement cords extending parallel to one another and an overlay structure (18) including an aliphatic polyamide reinforced layer, the aliphatic polyamide reinforced layer making an angle of between -5 degrees and +5 degrees with an equatorial plane (EP) of the tire (10), the aliphatic polyamide reinforced layer including aliphatic polyamide cords having a 1900/1 to 3000/1 Dtex, 1 to 10 turns per 2.54 cm cord construction, **characterized in that** the aliphatic polyamide reinforced layer has an end density in a range of from 15 to 25 ends per 2.54 cm of the aliphatic polyamide cords and the overlay structure (18) includes a strip with a width in the range of from 5 mm to 30 mm.

2. The tire of claim 1 wherein the aliphatic polyamide cords have a 2000/1 to 2200/1 Dtex, 1 to 10 turns per 2.54 cm cord construction.

3. The tire of claim 1 wherein the aliphatic polyamide cords have a 2400/1 to 2600/1 Dtex, 1 to 10 turns per 2.54 cm cord construction.

4. The tire of claim 1 wherein the aliphatic polyamide cords have a 2700/1 to 2900/1 Dtex, 1 to 10 turns per 2.54 cm cord construction.

5. The tire of at least one of the previous claims wherein the number of turns per 2.54 cm is in a range of from 3 to 6.

6. The tire of claim 5 wherein the number of turns per 2.54 cm is in a range of from 4 to 5 such as 4.6.

7. The tire of at least one of the previous claims wherein the twist of the aliphatic polyamide cords is a S-twist.

8. The tire of at least one of the previous claims 1 to 7 wherein the twist of the aliphatic polyamide cords is a Z-twist.

9. The tire of at least one of the previous claims wherein the aliphatic polyamide is nylon or aliphatic polyamide 6, 4.6 or 6.6.

10. The tire of at least one of the previous claims wherein the carcass (12) is a radial carcass.

11. The tire of at least one of the previous claims wherein the aliphatic polyamide reinforced layer extends transversely or at least partially transversely over the belt assembly.

12. The tire of at least one of the previous claims wherein the overlay structure (18) comprises two layers with a second layer located adjacent to, and radially outside of, a first layer.

## Patentansprüche

1. Luftreifen, umfassend eine Karkasse (12), eine radial auswärts von der Karkasse (12) angeordnete Lauffläche (19) und eine in einer Umfangsbeziehung zu der Karkasse (12) zwischen die Lauffläche (19) und die Karkasse (12) gesetzte Zenitverstärkungsstruktur (14), wobei die Zenitverstärkungsstruktur (14) eine Gürtelanordnung beinhaltet, die mindestens eine Gürtellage (15, 16) mit sich parallel zueinander erstreckenden Verstärkungskorden und eine Overlaystruktur (18), die eine mit aliphatischem Polyamid verstärkte Schicht beinhaltet, aufweist, wobei die mit aliphatischem Polyamid verstärkte Schicht einen Winkel von -5 Grad und +5 Grad mit einer Äquatorebene (EP) des Reifens (10) beschreibt, wobei die mit aliphatischem Polyamid verstärkte Schicht aliphatische Polyamidkorde beinhaltet, die eine Kordkonstruktion von 1900:1 bis 3000:1 dtex, 1 bis 10 Wicklungen je 2,54 cm aufweisen, **dadurch gekennzeichnet, dass** die mit aliphatischem Polyamid verstärkte Schicht eine Endendichte in einem Bereich von 15 bis 25 Enden je 2,54 cm der aliphatischen Polyamidkorde aufweist und die Overlaystruktur (18) einen Streifen mit einer Breite im Bereich von 5 mm bis 30 mm beinhaltet.

2. Reifen nach Anspruch 1, wobei die aliphatischen Polyamidkorde eine Kordkonstruktion von 2000:1 bis 2200:1 dtex, 1 bis 10 Wicklungen je 2,54 cm aufweisen.

3. Reifen nach Anspruch 1, wobei die aliphatischen Polyamidkorde eine Kordkonstruktion von 2400:1 bis 2600:1 dtex, 1 bis 10 Wicklungen je 2,54 cm aufweisen.

4. Reifen nach Anspruch 1, wobei die aliphatischen Polyamidkorde eine Kordkonstruktion von 2700:1 bis 2900:1 dtex, 1 bis 10 Wicklungen je 2,54 cm aufweisen.

5. Reifen nach mindestens einem der vorgenannten Ansprüche, wobei die Anzahl von Wicklungen je 2,54 cm in einem Bereich von 3 bis 6 liegt.

6. Reifen nach Anspruch 5, wobei die Anzahl von Wicklungen je 2,54 cm in einem Bereich von 4 bis 5, wie etwa 4,6, liegt.

7. Reifen nach mindestens einem der vorgenannten Ansprüche, wobei die Verdrillung der aliphatischen Polyamidkorde eine S-Verdrillung ist.

8. Reifen nach mindestens einem der vorgenannten Ansprüche, wobei die Verdrillung der aliphatischen Polyamidkorde eine Z-Verdrillung ist.

9. Reifen nach mindestens einem der vorgenannten Ansprüche, wobei das aliphatische Polyamid Nylon oder aliphatisches Polyamid 6, 4,6 oder 6,6 ist.

10. Reifen nach mindestens einem der vorgenannten Ansprüche, wobei die Karkasse (12) eine Radialkarkasse ist.

11. Reifen nach mindestens einem der vorgenannten Ansprüche, wobei die mit aliphatischem Polyamid verstärkte Schicht sich quer oder mindestens teilweise quer über die Gürtelanordnung erstreckt.

12. Reifen nach mindestens einem der vorgenannten Ansprüche, wobei die Overlaystruktur (18) zwei Schichten umfasst, wobei eine zweite Schicht sich benachbart zu, und radial außerhalb von, einer ersten Schicht befindet.

## Revendications

1. Bandage pneumatique comprenant une carcasse (12), une bande de roulement (19) disposée en position radiale à l'extérieur de la carcasse (12) et une structure de renforcement de sommet (14) intercalée entre la bande de roulement (19) et la carcasse (12) en relation circonférentielle avec la carcasse (12), la structure de renforcement de sommet (14) englobant un assemblage de ceintures possédant au moins une nappe de ceinture (15, 16) comprenant des câblés de renforcement s'étendant parallèlement les uns aux autres, et une structure de recouvrement (18) englobant une couche renforcée avec du polyamide aliphatique, la couche renforcée avec du polyaramide aliphatique faisant un angle entre - 5° et +5° avec le plan équatorial (EP) du bandage pneumatique (10), la couche renforcée avec du polyamide aliphatique englobant des câblés de polyamide aliphatique possédant une construction de câblés de 1 à 10 spires par 2,54 cm, avec une valeur Dtex de 1900/1 à 3000/1, **caractérisé en ce que** la couche renforcée avec du polyamide aliphatique possède une densité de bouts dans la plage de 15 à 25 bouts par 2,54 cm des câblés de polyamide aliphatique et la structure de recouvrement (18) englobe une bande dont la largeur se situe dans la plage de 5 mm à 30 mm.

2. Bandage pneumatique selon la revendication 1, dans lequel les câblés de polyamide aliphatique possèdent une construction de câblés de 1 à 10 spires par 2,54 cm avec une valeur Dtex de 2000/1 à 2200/1.

3. Bandage pneumatique selon la revendication 1, dans lequel les câblés de polyamide aliphatique possèdent une construction de câblés de 1 à 10 spires par 2,54 cm avec une valeur Dtex de 2400/1 à 2600/1.

4. Bandage pneumatique selon la revendication 1, dans lequel les câblés de polyamide aliphatique possèdent une construction de câblés de 1 à 10 spires par 2,54 cm avec une valeur Dtex de 2700/1 à 2900/1.

5. Bandage pneumatique selon au moins une des revendications précédentes, dans lequel le nombre de spires par 2,54 cm se situe dans la plage de 3 à 6.

6. Bandage pneumatique selon au moins une des revendications précédentes, dans lequel le nombre de spires par 2,54 cm se situe dans la plage de 4 à 5, par exemple s'élève à 4,6.

7. Bandage pneumatique selon au moins une des revendications précédentes, dans lequel la torsion des câblés de polyamide aliphatique est une torsion S.

8. Bandage pneumatique selon au moins une des revendications précédentes, dans lequel la torsion des câblés de polyamide aliphatique est une torsion Z.

9. Bandage pneumatique selon au moins une des revendications précédentes, dans lequel le polyamide aliphatique est du nylon ou du polyamide aliphatique 6, 4,6 ou 6,6.

10. Bandage pneumatique selon au moins une des revendications précédentes, dans lequel la carcasse (12) est une carcasse radiale.

11. Bandage pneumatique selon au moins une des revendications précédentes, dans lequel la couche renforcée avec du polyamide aliphatique s'étend en direction transversale ou au moins en partie en direction transversale par-dessus l'assemblage de ceintures.

12. Bandage pneumatique selon au moins une des revendications précédentes, dans lequel la structure de recouvrement (18) comprend deux couches, une deuxième couche étant disposée en position adjacente et à l'extérieur d'une première couche, en direction radiale.
